# EUROPÄISCHE PATENTANMELDUNG

(11) **EP 1 429 000 A1**
(43) Veröffentlichungstag der Anmeldung: **16.06.2004**
(21) Anmeldenummer: 02027430.4
(22) Anmeldetag: 09.12.2002
(51) Int. Cl.: F02C 3/34

(54) **Verfahren und Vorrichtung zum Betrieb einer Gasturbine mit einer fossilbefeuerten Brennkammer**

(71) Anmelder: SIEMENS AKTIENGESELLSCHAFT, 80333 München (DE)
(72) Erfinder: Becker, Bernard, Dr., 45481 Mülheim a.d. Ruhr (DE)

(57) **Zusammenfassung**

Es wird ein Verfahren bzw. eine entsprechende Vorrichtung (1) vorgestellt, wobei die Gasturbine verlassendes Abgas (9) in einen ersten (11) und in einen zweiten Teilstrom (13) aufgeteilt wird. Der erste Teilstrom (11) wird mit Verbrennungsluft (15) vermischt und das dabei entstandene Gemisch (17) zur Brennkammer (5) geführt und der zweite Teilstrom wird (13) einer Kohlendioxid-Abscheidungsanlage (21) zugeführt.

In einer bevorzugten Ausgestaltung wird das die Gasturbine (3) verlassende Abgas (9) zuvor zur Erzeugung von Betriebsdamf (31) für eine Dampfturbine (33) genutzt (Gas- und Dampfkraftwerk) und anschließend gekühlt, bevor die Aufteilung des Abgases (9) in die genannten Teilströme (11,13) stattfindet. Dabei wird bei der Abkühlung anfallendes Wasser (29) abgeführt.

## Beschreibung

Die Erfindung betrifft ein Verfahren sowie eine Vorrichtung zum Betrieb einer Gasturbine mit einer fossilbefeuerten Brennkammer.

Eines der immer drängender werdenden Umweltprobleme der heutigen Zeit besteht in der zunehmenden Luftverschmutzung, zu welcher schädliche Verbrennungsprodukte aus verschiedensten Verbrennungsprozessen einen nicht unerheblichen Beitrag liefern.

An vorderer Stelle sind dabei insbesondere die klimaschädlichen Gase wie Stickoxide und Kohlendioxid zu nennen.

Auch die Erzeugung von elektrischer Energie mittels Verfeuerung eines fossilen Brennstoffs belastet die Umwelt mit den o.g. klimaschädlichen Gasen.

Beispielsweise sind bei einem Gaskraftwerk im Abgas einer Gasturbine diese Gase enthalten und müssen insbesondere zur Einhaltung von vorgegebenen Emissionsnormen geeignet behandelt werden.

Bei Kraftwerken mit einem kombinierten Gas- und Dampfprozess ist diese Problematik etwas weniger stark ausgeprägt, da derartige Gas- und Dampfkraftwerke infolge ihres hohen Wirkungsgrads im Vergleich zu reinen Gas- oder Dampfkraftwerken weniger klimaschädliche Gase produzieren.

Jedoch ist selbst bei diesen Kraftwerken ein großer Aufwand notwendig, um die entstehenden klimaschädlichen Gase umweltunschädlich zu behandeln.

Die Abscheidung des bei einer Verbrennung von Kohlenwasserstoffen wie z.B. Erdgas oder Heizöl oder von synthetischen Gasen wie z.B. Gase aus einer Kohlevergasung, Schweröl oder Biomasse entstehende Kohlendioxid kann beispielsweise durch starke Abkühlung der Verbrennungsabgase weit unter 0°C erfolgen, wobei zunächst Wasser und dann Kohlendioxid in flüssiger Form anfällt, wobei letzteres bei sehr starker Abkühlung auch gefrieren und somit in fester Form anfallen kann.

Dieses flüssige oder feste Kohlendioxid kann dann gelagert werden, so dass es nicht mehr in die Atmosphäre austreten und sich mit Luft vermischen kann.

Typisches Abgas einer Gasturbine enthält jedoch nur ca. 5-10% Kohlendioxid und mehr als 70% an Stickstoff und/oder Stickstoffverbindungen, so dass zur Abscheidung,des relativ geringen Anteils an Kohlendioxids eine sehr große Menge an Abgas abgekühlt werden muss, was eine entsprechend große Dimensionierung einer dafür vorgesehenen Kohlendioxid-Abscheidungsanlage nötig macht und mit einem hohen Energiebedarf verbunden ist.

Der Erfindung liegt daher die Aufgabe zu Grunde, ein verbessertes Verfahren und eine Vorrichtung zum Betrieb einer Gasturbine mit einer fossilbefeuerten Brennkammer anzugeben.

Insbesondere soll die Menge der dabei an die Umwelt abgegebenen klimaschädlichen Gase, insbesondere Stickoxide und/oder Kohlendioxid, weitestgehend reduziert werden in Richtung einer Null-Emission.

Die Aufgabe wird erfindungsgemäß gelöst durch Verfahren zum Betrieb einer Gasturbine mit einer fossilbefeuerten Brennkammer, mit folgenden Schritten:
- die Gasturbine verlassendes Abgas wird in einen ersten und in einen zweiten Teilstrom aufgeteilt,
- der erste Teilstrom wird mit Verbrennungsluft vermischt und das entstandene Gemisch zur Brennkammer zurück geführt, und
- der zweite Teilstrom wird einer Kohlendioxid-Abscheidungsanlage zugeführt.

Die Erfindung geht dabei von der Überlegung aus, dass die Entstehung stickoxidhaltiger Abgase insbesondere durch eine Reduzierung des Sauerstoffgehalts in dem für die Verbrennung genutzten Luftgemisch, welches der Brennkammer zugeführt wird, erreicht werden kann. Dadurch sinkt der Sauerstoff-Partialdruck in der Verbrennungsflamme, was zu einer gewünschten Reduktion der Bildungsrate an Stickoxiden führt, und die Verbrennungsflamme weist wegen des hohen Inertgasanteils in einem derartigen Luftgemisch eine reduzierte Temperatur auf im Vergleich zu einer Verbrennung unter Zufuhr von normaler Verbrennungsluft, welche einen Sauerstoffanteil von etwa 21% aufweist.

Weiterhin kann die im Zusammenhang mit einem erfindungsgemäßen Verfahren eingesetzte Kohlendioxid-Abscheidungsanlage kleiner dimensioniert werden als im Stand der Technik vorgesehen, da nur noch ein Teilstrom, nämlich der zweite Teilstrom, des Abgases, welcher insbesondere 20-70%, bevorzugt etwa 50%, des Abgasstroms entspricht, der Kohlendioxid-Abscheidungsanlage zugeführt wird. Letztere kann daher für eine im Vergleich zum Stand der Technik kleinere Menge an Abgas ausgelegt werden, was auch einen entsprechend verringerten Energiebedarf bedeutet. Dies bedeutet insbesondere auch eine gleichbleibende Stromproduktion bei gleichzeitig reduziertem Anfall an Kohlendioxid.

Der erste Teilstrom wird unter Beimischung von normaler Verbrennungsluft zur Brennkammer re-zirkuliert.

Bevorzugt wird die Vermischung des ersten Teilstroms mit der Verbrennungsluft derart vorgenommen, dass das entstehende Gemisch einen im Vergleich zu normaler Verbrennungsluft etwa halbierten Gehalt an Sauerstoff, insbesondere etwa 12%, aufweist.

Dadurch ist gewährleistet, dass im nachfolgenden Verbrennungsprozess in der Brennkammer der im Gemisch enthaltene Sauerstoffanteil bis auf einen kleineren Rest, insbesondere zwischen 0 und 5%, typischerweise 3%, genutzt wird.

So ist die Restmenge an Sauerstoff im Abgas nach dem Verbrennungsprozess mittels einer bedarfsweisen Einstellung des Mengenverhältnisses zwischen Verbrennungsluft und dem ersten Teilstrom einstellbar.

Die Verbrennung erfolgt somit im Wesentlichen vollständig und die Entstehung von Kohlenmonoxid ist ebenfalls reduziert.

Vorteilhaft wird das Abgas vor der Aufteilung in den ersten und den zweiten Teilstrom abgekühlt und dabei anfallendes Wasser abgeführt.

Dadurch wird die verbleibende, noch zu behandelnde, Menge an Abgas reduziert, insbesondere dessen Sauerstoffanteil, da im Wasser gebundener Sauerstoff umweltunschädlich abgeführt werden kann.

Bevorzugt findet dabei die Abkühlung des Abgases in mindestens einer ersten und einer zweiten Kühlstufe stattfindet.

Ein derartiges mehrstufiges Abkühlungsverfahren gestattet eine gute Einstellung eines gewünschten Temperaturgefälles, welchem das Abgas unterzogen wird, so dass die Abscheidung des Wassers mengenmäßig und/oder zeitmäßig optimiert werden kann. Außerdem ist dabei auch ein effizienter Einsatz der bei der Abkühlung zu investierenden Energie möglich.

In einer besonders bevorzugten Ausführungsform wird das Abgas nach dessen Austritt aus der Gasturbine einem Abhitzedampferzeuger zur Erzeugung von Betriebsdampf für eine Dampfturbine und anschließend der ersten Kühlstufe zugeführt.

Der Wirkungsgrad eines derartigen Gas- und Dampfkraftwerks ist durch die Nutzung der im Abgas der Gasturbine enthaltenen Hitze in einem kombinierten Gas- und Dampfprozess besonders hoch.

Bevorzugt wird die erste Kühlstufe dabei mit einem Kühlmittel betrieben, welches auch zum Betrieb eines Kondensators benutzt wird, in welchen die Dampfturbine verlassender entspannter Dampf eingeleitet wird.

Der Kondensator ist bei einem Gas- und Dampfkraftwerk ohnehin vorhanden und wird mit einem Kühlmittel betrieben zur Kondensation des entspannten Dampfs aus der Dampfturbine. Das Kondensat wird dann wieder dem Speisewasserkreislauf zugeführt. Bei der vorliegenden Ausführungsform wird nun das ohnehin im Kühlkreislauf des Kondensators verwendete Kühlmittel auch für den Betrieb der ersten Kühlstufe benutzt.
Dadurch ist der Aufwand bei der Ausführung der ersten Kühlstufe durch die Doppelnutzung des Kühlmittels, beispielsweise ausgeführt als eine Reihen- oder Parallelschaltung der Kühlkreisläufe des Kondensators und der ersten Kühlstufe, reduziert.

Das Kühlmittel kann dabei Luft und/oder Wasser umfassen.

Die Kohlendioxid-Abscheidungsanlage umfasst bevorzugt einen Kühlprozess für eine Abkühlung des zweiten Teilstroms.

Derartige kälteerzeugende Kohlendioxid-Abscheidungsanlage sind bekannt und bewährt und im Zusammenhang mit einem erfindungsgemäßen Verfahren leicht einsetzbar.

In einer weiteren Ausführungsform der Erfindung wird mittels der Kohlendioxid-Abscheidungsanlage abgeschiedenes Kohlendioxid einer Lagereinrichtung zugeführt.

Hierbei ist die umweltgerechte Behandlung des Kohlendioxids sicher gestellt und insbesondere verhindert, dass dieses an die Atmosphäre gelangen und sich mit dieser vermischen kann, was klimaschädigende Auswirkungen auf die Umwelt bedeuten würde.

Weiterhin ist es vorteilhaft, wenn das Kohlendioxid in flüssigem und/oder festen Aggregatzustand, insbesondere im gefrorenen Zustand, gelagert wird.

Dabei sind die Gefahr des Kohlendioxidaustritts aus der Lagereinrichtung in die Atmosphäre und die Anforderungen an die Sicherheit der Lagereinrichtung minimiert.

Die Erfindung führt weiterhin zu einer Vorrichtung zum Betrieb einer Gasturbine mit einer fossilbefeuerten Brennkammer gemäß des entsprechenden unabhängigen Patentanspruchs.

Bevorzugte Ausführungsformen einer erfindungsgemäßen Vorrichtung sind den vom genannten unabhängigen Patentanspruch abhängigen Unteransprüchen zu entnehmen.

Die im Zusammenhang mit einem erfindungsgemäßen Verfahren und dessen Ausführungsformen gemachten Angaben und Erläuterungen sind auf eine erfindungsgemäße Vorrichtung und deren Ausführungsformen übertragbar und werden daher hier nicht wiederholt.

Im folgenden ist ein Ausführungsbeispiel der Erfindung näher dargestellt.

Es zeigt:
- FIG: eine erfindungsgemäße Vorrichtung, welche als ein Gas- und Dampfkraftwerk ausgebildet ist.

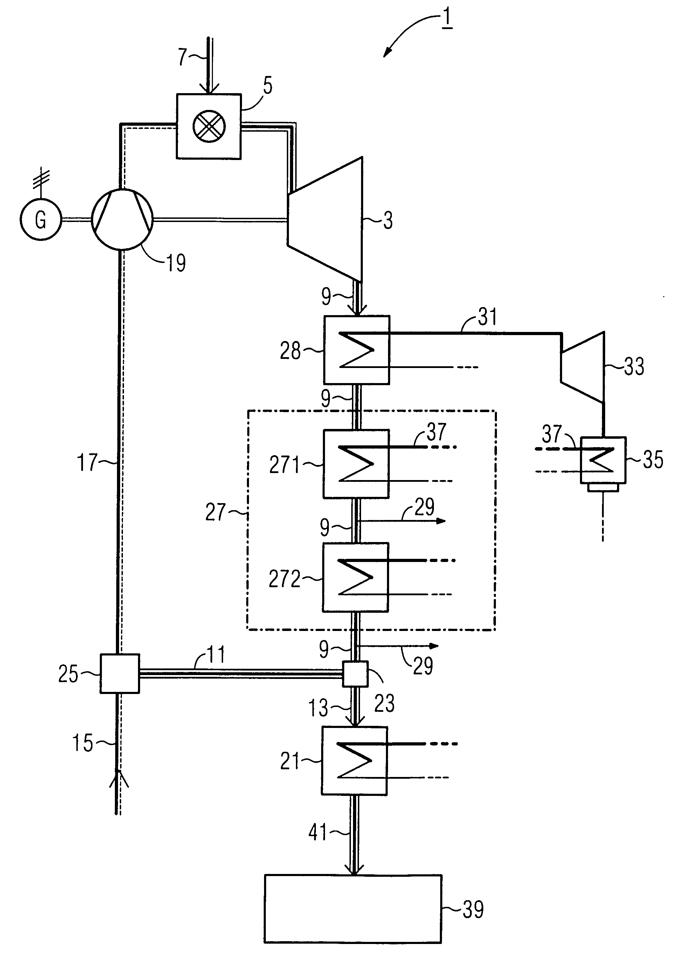

In der Figur ist eine erfindungsgemäße Vorrichtung 1 zum Betrieb einer Gasturbine dargestellt, wobei die Gasturbine eine Arbeitsturbine 3, eine Brennkammer 5 und einen Verdichter 19 umfasst. Die Vorrichtung 1 ist ausgebildet als ein Gas- und Dampfkraftwerk.

Die Arbeitsturbine 3 wird mit einem heißen Gas beaufschlagt, welches in der Brennkammer 5 aufbereitet wird. Ein fossiler Brennstoff 7 wird dazu in die Brennkammer 5 geleitet und verbrannt.

Nach Verrichtung von Arbeit verlässt das noch heiße Gas als Abgas 9 die Arbeitsturbine 3 und wird einem Abhitzedampferzeuger 28 zugeleitet, mittels welchem Betriebsdampf 31 für eine Dampfturbine 33 erzeugt wird. Die genannte Art der Kopplung der Dampfturbine 33 mit der Arbeitsturbine 3 wird als GUD-Prozess bezeichnet, welcher sich insbesondere durch einen hohen Wirkungsgrad bei der Energieerzeugung auszeichnet.

Zur Erzeugung von elektrischer Energie ist dazu ein Generator G an die Arbeitsturbine 3 gekoppelt; ein weiterer Generator ist üblicherweise mit der Dampfturbine 33 verbunden, was in der Darstellung der Figur nicht näher gezeigt ist.

Das den Abhitzedampferzeuger 28 verlassende Abgas 9 wird einer Kühlvorrichtung 27 zugeführt, welche zweistufig ausgebildet ist, umfassend eine erste Kühlstufe 271 und eine zweite Kühlstufe 272.

Die erste Kühlstufe 271 wird im vorliegenden Ausführungsbeispiel mit einem Kühlmittel 37 betrieben, welches auch zum Betrieb eines Kondensators 35 benutzt wird, welcher der Dampfturbine 33 nachgeschaltet und in welchen entspannter Dampf 43, welcher die Dampfturbine 33 verlässt, eingeleitet wird.

Durch die Abkühlung des Abgases 9 in der ersten Kühlstufe 271 fällt bereits ein Teil des im Abgas 9 enthaltenen Wassers 29 in flüssiger Form aus und kann abgeführt werden.

In der zweiten Kühlstufe 272 wird das Abgas 9 weiter abgekühlt, insbesondere bis auf Temperaturen leicht über dem Gefrierpunkt von Wasser, um Eisbildung zu verhindern. Bei dieser Kühlung fällt wiederum noch im Abgas enthaltenes Wasser 29 in flüssiger Form an, welches wiederum abgeführt werden kann.

Nach Verlassen der Kühlvorrichtung 27 wird der Strom des Abgases 9 mittels einer Abzweigungsvorrichtung 23 aufgeteilt in einen ersten Teilstrom 11 und einen zweiten Teilstrom 13.

Bevorzugt etwa die Hälfte des Abgasstroms wird als der zweite Teilstrom 13 einer Kohlendioxid-Abscheidungsanlage 21 zugeleitet, in welcher der zweite Teilstrom 13 weiter abgekühlt und dabei anfallendes Kohlendioxid 41 entnommen und in eine Lagereinrichtung 39 eingeleitet wird.

Der erste Teilstrom 11, welcher entsprechend einer bevorzugten Ausführungsform der Hälfte des Abgasstroms vor der Abzweigungsvorrichtung 23 entspricht, wird mittels einer Mischvorrichtung 25 mit Verbrennungsluft 15 vermischt und als Gemisch 17 über den Verdichter 19 zur Brennkammer 5 zurück geführt.

Das Gemisch 17 besitzt gemäß vorliegender Ausführungsform nicht mehr den normalen Sauerstoffgehalt der Verbrennungsluft 15, welcher üblicherweise bei ca. 21 % liegt, sondern nur noch etwas mehr als die Hälfte davon, ca. 12 %.

Die genannte Senkung des Sauerstoffgehalts im Vergleich zum Stand der Technik ist dadurch begründet, dass das Gemisch 17 zu einem gewissen Teil, bevorzugt wie oben genannt zur Hälfte, aus einem re-zirkulierten Abgasteilstrom, dem ersten Teilstrom 11, besteht, welcher nur noch einen geringen Sauerstoffanteil aufweist.

Der verbleibende Teil des Gemischs 17 ist durch die Verbrennungsluft 15 gebildet, so dass der prozentuale Anteil an Sauerstoff im Gemisch 17 deutlich unter dem Sauerstoffgehalt der unvermischten Verbrennungsluft 15 liegt.

Die genannte reduzierte Sauerstoffmenge im Gemisch 17 wird beim nachfolgenden Verbrennungsprozess in der Brennkammer 5 bis auf einen kleinen Rest (0 bis 5 %, typisch 3 %) zur Verbrennung des fossilen Brennstoffs 7 genutzt.

Der Sauerstoffgehalt des Gemischs 17 wird also mittels der Mischvorrichtung 25 durch die Einstellung des Mengenverhältnisses zwischen dem ersten Teilstrom 11 und der Verbrennungsluft 15 bedarfsweise festgelegt. Bevorzugt wird der Sauerstoffgehalt des Gemischs 17 so niedrig, aber hoch genug eingestellt, dass die Verbrennung des fossilen Brennstoffs 7 in der Brennkammer 5 noch vollständig erfolgt und praktisch keine unverbrannten Anteile und/oder Kohlenmonoxid zurück bleiben bzw. gebildet werden.

Der im Vergleich zum Stand der Technik reduzierte Sauerstoffgehalt wirkt mindernd auf die Bildungsrate von Stickoxiden, weil infolge des verringerten Sauerstoff-Partialdrucks in der Verbrennungsflamme die Neigung zur Stickoxidbildung deutlich verringert ist. Des Weiteren ist die Flammentemperatur wegen des hohen Inertgasanteils geringer im Vergleich zu einer Verbrennung unter normaler Luftatmosphäre.

Da im Vergleich zu Lösungen aus dem Stand der Technik zur Kohlendioxid-Abscheidungsanlage 21 nur noch ein Teil des Abgasstroms, bevorzugt in etwa die Hälfte, geleitet wird, muss diese Anlage nur noch für eine kleinere Abgasstrommenge ausgelegt werden, wobei auch der Energieaufwand zur Abkühlung des Abgases 9 in dieser Anlage entsprechend verringert ist.

Ein erfreulicher Nebenaspekt der vorgeschlagenen Vorrichtung besteht darin, dass insbesondere in Gebieten mit herrschender Wasserknappheit das abgeschiedene Wasser 29 in vielfacher Weise weiter verwendet und somit ein Beitrag zur Wasserversorgung geleistet werden kann.

Durch ein erfindungsgemäßes Verfahren bzw. eine entsprechende Vorrichtung kann insbesondere ein Kraftwerksbetrieb realisiert werden, bei welchem praktisch kein klimaschädliches Kohlendioxid mehr anfällt.

Die Erfindung lässt sich wie folgt zusammenfassen:

Bei einem erfindungsgemäßen Verfahren bzw. einer entsprechenden Vorrichtung ist es vorgesehen, die Gasturbine verlassendes Abgas in einen ersten und in einen zweiten Teilstrom aufzuteilen, den ersten Teilstrom mit Verbrennungsluft zu vermischen, das dabei entstandene Gemisch zur Brennkammer zurückzuführen, und den zweiten Teilstrom einer Kohlendioxid-Abscheidungsanlage zuzuführen.

In einer vorteilhaften Ausgestaltung wird das die Gasturbine verlassende Abgas zuvor zur Erzeugung von Betriebsdampf für eine Dampfturbine genutzt (Gas- und Dampfkraftwerk) und anschließend gekühlt, bevor die Aufteilung des Abgases in die genannten Teilströme stattfindet. Dabei wird bei der Abkühlung anfallendes Wasser abgeführt.

## Patentansprüche

1. Verfahren zum Betrieb einer Gasturbine mit einer fossilbefeuerten Brennkammer (5),
**gekennzeichnet durch** folgende Schritte:
a) die Gasturbine verlassendes Abgas (9) wird in einen ersten (11) und in einen zweiten Teilstrom (13) aufgeteilt,
b) der erste Teilstrom (11) wird mit Verbrennungsluft (15) vermischt und das entstandene Gemisch (17) zur Brennkammer (5) zurück geführt, und
c) der zweite Teilstrom (13) wird einer Kohlendioxid-Abscheidungsanlage (21) zugeführt.

2. Verfahren nach Anspruch 1,
**dadurch gekennzeichnet, dass**
das Abgas (9) vor der Aufteilung in den ersten (11) und den zweiten Teilstrom (13) abgekühlt und dabei anfallendes Wasser (29) abgeführt wird.

3. Verfahren nach Anspruch 2,
**daurch gekennzeichnet, dass**
die Abkühlung des Abgases (9) in mindestens einer ersten (271) und einer zweiten Kühlstufe (272) stattfindet.

4. Verfahren nach Anspruch 3,
**dadurch gekennzeichnet, dass**
das Abgas (9) nach dessen Austritt aus der Gasturbine einem Abhitzedampferzeuger (28) zur Erzeugung von Betriebsdampf (31) für eine Dampfturbine (33) und anschließend der ersten Kühlstufe (271) zugeführt wird.

5. Verfahren nach Anspruch 4,
**dadurch gekennzeichnet, dass**
die erste Kühlstufe (271) mit einem Kühlmittel (37) betrieben wird, welches auch als Kühlmittel (37) eines Kondensators benutzt wird, in welchen die Dampfturbine (33) verlassender entspannter Dampf (43) eingeleitet wird.

6. Verfahren nach einem der Ansprüche 1 bis 5,
**dadurch gekennzeichnet, dass**
die Kohlendioxid-Abscheidungsanlage (21) einen Kühlprozess für eine Abkühlung des zweiten Teilstroms (13) umfasst.

7. Verfahren nach einem der Ansprüche 1 bis 6,
**dadurch gekennzeichnet, dass**
mittels der Kohlendioxid-Abscheidungsanlage (21) abgeschiedenes Kohlendioxid (41) einer Lagereinrichtung (39) zugeführt wird.

8. Verfahren nach Anspruch 7,
**dadurch gekennzeichnet, dass**
das Kohlendioxid (41) in flüssigem und/oder festen Aggregatzustand, insbesondere im gefrorenen Zustand, gelagert wird.

9. Vorrichtung (1) zum Betrieb einer Gasturbine mit einer fossilbefeuerten Brennkammer (5),
**gekennzeichnet durch**
• eine Abzweigungsvorrichtung (23), mittels welcher die Gasturbine verlassendes Abgas (9) in einen ersten (11) und einen zweiten Teilstrom (13) aufteilbar ist,
• eine Mischvorrichtung (25), mittels welcher der erste Teilstrom (11) mit Verbrennungsluft (15) vermischbar und der Brennkammer (5) zuführbar ist, und
• eine Kohlendioxid-Abscheidungsanlage (21), welcher der zweite Teilstrom (13) zuführbar ist.

10. Vorrichtung (1) nach Anspruch 9,
**gekennzeichnet durch**
eine der Abzweigungsvorrichtung (23) vorgeschaltete Kühlvorrichtung (27), mittels welcher das Abgas (9) kühlbar und dabei anfallendes Wasser (29) abführbar ist.

11. Vorrichtung (1) nach Anspruch 10,
**dadurch gekennzeichnet, dass**
die Kühlvorrichtung (27) mindestens eine erste (271) und eine zweite Kühlstufe (272) umfasst.

12. Vorrichtung (1) nach Anspruch 11,
**gekennzeichnet durch**
einen der Gasturbine nachgeschalteten und der ersten Kühlstufe (271) vorgeschalteten Abhitzedampferzeuger (28), mittels welchen Betriebsdampf (31) für eine Dampfturbine (33) erzeugbar ist.

13. Vorrichtung (1) nach Anspruch 12,
**gekennzeichnet durch**
einen der Dampfturbine (33) nachgeschalteten Kondensator (35), wobei die erste Kühlstufe (271) mit einem Kühlmittel (37) betreibbar ist, welches auch als Kühlmittel des Kondensators (35) genutzt ist.

14. Vorrichtung (1) nach einem der Ansprüche 9 bis 13,
**dadurch gekennzeichnet, dass**
die Kohlendioxid-Abscheidungsanlage (21) als Kälteanlage ausgebildet ist, mittels welcher der zweite Teilstrom (13) kühlbar ist.

15. Vorrichtung (1) nach einem der Ansprüche 9 bis 14,
**gekennzeichnet durch**
eine Lagereinrichtung (39), in welcher mittels der Kohlendioxid-Abscheidungsanlage (21) abgeschiedenes Kohlendioxid (41) lagerbar ist.

16. Vorrichtung (1) nach Anspruch 15,
**dadurch gekennzeichnet, dass**
die Lagereinrichtung (39) ausgebildet ist zur Lagerung flüssigen und/oder festen, insbesondere gefrorenen, Kohlendioxids (41).
